Europäisches Patentamt

European Patent Office

Office européen des brevets

(11) Publication number: **0 368 560**

**A2**

# (12) EUROPEAN PATENT APPLICATION

(21) Application number: 89311338.1

(22) Date of filing: 02.11.89

(51) Int. Cl.5: **G01N 21/35, G12B 17/08**

(30) Priority: 07.11.88 FR 8814498

(43) Date of publication of application:
16.05.90 Bulletin 90/20

(84) Designated Contracting States:
AT BE CH DE ES FR GB GR IT LI NL SE

(71) Applicant: BP OIL INTERNATIONAL LIMITED
Britannic House Moor Lane
London EC2Y 9BU(GB)

(72) Inventor: Lapeyre, Jean-Louis
BP France Raffinerie de Lavera
Boîte Postale 1 F-13117 Lavera(FR)
Inventor: Verwaerde, Roger
BP France Raffinerie de Lavera
Boîte Postale 1 F-13117 Lavera(FR)
Inventor: Lambert, Didier Charles
BP France Raffinerie de Lavera
Boîte Postale 1 F-13117 Lavera(FR)
Inventor: Martens, Andre
BP France Raffinerie de Lavera
Boîte Postale 1 F-13117 Lavera(FR)

(74) Representative: MacLeod, Malcolm et al
BP INTERNATIONAL LIMITED Patents
Division Chertsey Road
Sunbury-on-Thames Middlesex TW16
7LN(GB)

(54) Analyser.

(57) A continuous analyser comprises a spectrometer (2), suitably an NIR spectrometer, and a computer for automatic data processing, for operation in a classified safety area. The spectrometer (2), the central processing unit (3) of the computer, the video monitor (4) and the keyboard are enclosed in a leakproof pressurised cabinet (1) which also contains an air conditioner (9), the condenser (10) of which is located outside the cabinet (1). Purging of the atmosphere initally contained in the cabinet (1), the pressurisation of the cabinet (1) and the subsequent maintenance of this pressure are controlled by a pneumatic logic controller (13). This operates a purging phase during which the pneumatic logic controller (13) checks the escape of the minimum flow through an output module (16) for a specific time before permitting connection of the electrical equipment (2,3,4). This is followed by a pressure maintenance phase during which a desired pressure is maintained inside the cabinet (1) without appreciable escape through the output module (16).

FIG.1

## ANALYSER

This invention relates to a continuous on-line automatic analyser for use in a classified safety area.

Several continuous automatic analysers comprising spectrometers are known, for example, as described in our copending European patent application EP A 0285251. However, the electrical equipment used in these analysers, ie the spectrometer and the computer, cannot be used in a classified safety area, ie one considered to present a risk of explosion. These may be found in oil refineries, petrochemical installations and workshops using inflammable solvents.

On the basis of recommendations in the standard CENELEC EN 50016, defining a method of protection by internally pressurising enclosures containing electrical equipment, various devices have been developed which require electricity for their own operation and their initial pressurisation, and which cannot therefore be operated in an explosive atmosphere, unless bulky, flameproof components are used. Currently available data processing equipment cannot readily be used in a classified area. The keyboard presents a particular problem since it must remain accessible to the user.

In the oil and chemical industries both the external atmosphere and the product to be sampled are frequently potentially hazardous. If a sample taken in situ is fed by a pump and a line to the inside of a pressurised cabinet, this presents a danger in the event of leakage of explosive material inside the pressurised cabinet. It is also necessary to use flameproof equipment for the pumping operation. If, however, the analytical chamber is outside the pressurised cabinet, and if the light used for the spectrometric analysis is transmitted and returned by means of optical fibres, these optical fibres generally have a narrow band pass which limits the capabilities of the equipment.

An object of the present invention is to reduce or eliminate the above disadvantages by providing a continuous analyser which is able to operate effectively and safely at or near to sampling points in a classified area, which is able to start up without risk, even after an interruption, and which is able to operate on a wide spectral band, with maximum accuracy.

The invention consists essentially in enclosing the spectrometer, and the central unit of the associated computer and its peripherals (screen, keyboard, etc), inside a leak proof cabinet designed to resist internal pressure and cooled by an air-conditioner, the condenser of the refrigeration unit being located outside the cabinet, the initial purging of the cabinet atmosphere being carried out by means of a pneumatic device which, in a purging phase, determines the existence of a minimum escape flow across an output module for a specific purging time, then in a subsequent pressurisation phase ensures that the internal pressure of the cabinet is maintained, and prevents the connection of the electrical equipment contained in this cabinet until these two phases are completed.

The analytical chamber through which the product to be analyzed flows is preferably located in the immediate vicinty of the lines of the production unit, so that the circulation of the sampled liquid can be effected by natural differential pressure, or failing this, by a simple Pitot tube located upstream in the line, together with a discharge tube, located immediately down stream, the analytical chamber, which is therefore outside the cabinet, being linked to the spectrometer by means of at least one pair of optrodes and optical fibres, and preferably including a multiplexer located in the cabinet which permits the successive selection of pairs of optical fibres when more than one pair is present.

A sampling device may be provided with circulation detector, filters and calibration devices, if desired.

The optical fibres, as well as the optical system of the optrodes, and the arrangement of the terminal face of the fibres relative to the centre of the optical system, are selected to provide a wide band pass.

The cabinet is preferably provided with a window closed by transparent glass of sufficient thickness to resist the internal pressure in the cabinet, through which the video monitor of the central unit may be observed, if provided, so that the keyboard of this central unit can be actuated. The keyboard is preferably of the capacitance type.

The output module is preferably provided with a magnetically operated discharge valve connected upstream to a pressure monitoring line transmitting the pressure to the pneumatic control box, the gas escaping from this valve by means of a throttle, so that an excess pressure, maintained by a purge flow monitoring line, is maintained downstream from the valve, the information being transmitted to the pneumatic control box.

The spectrometer is preferably a NIR (Near Infra Red) Fourier Transform Spectrometer.

The invention is illustrated with reference to the accompanying drawings wherein:

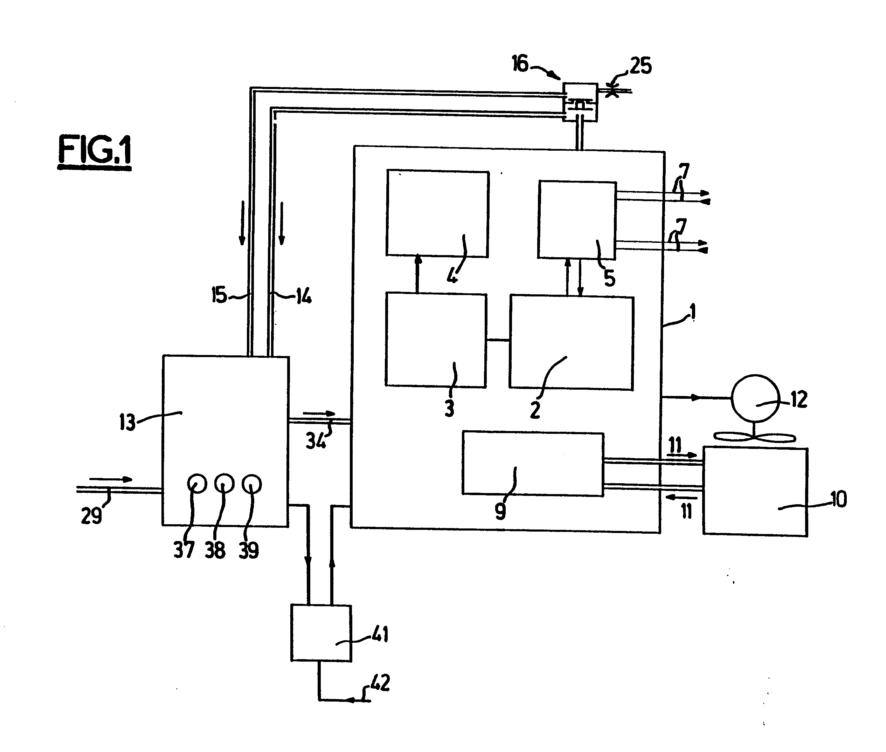

Figure 1 is a schematic diagram

Figure 2 is an axial section of the output module;

Figure 3 is a pneumatic diagram of the pneumatic control box;

Figure 4 is an axial section of the analytical chamber; and

Figure 5 is an installation diagram of this chamber. Figure 1 shows a leak proof cabinet 1 which contains all the electrical and electronic equipment which cannot, or which can only with difficulty, be constructed of flameproof material. In particular, spectrometer 2, central unit 3 of the associated computer, its keyboard, not shown, and its video monitor 4 are included.

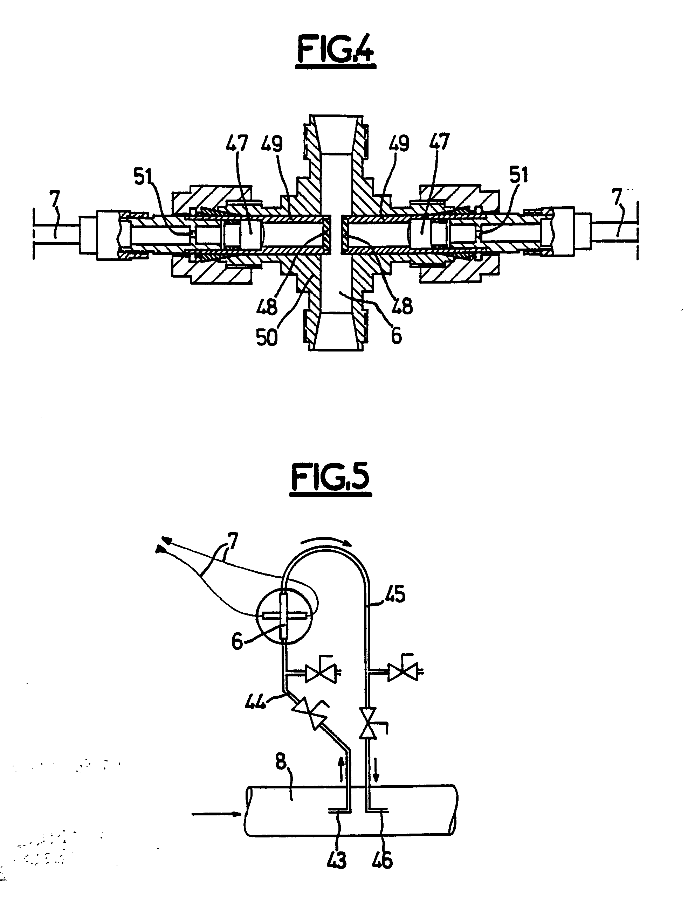

A multiplexer 5, connects the spectrometer to an external analytical chamber 6 (see Figure 4), by means of optical fibres 7. The multiplexer enables several pairs of fibres 7 to be connected, corresponding to several analytical chambers arranged on various lines 8 (Figure 5).

According to the standards, pressurising the inside of the cabinet to a positive pressure which may be as much as 20 mbars, for example, eliminates the risk of explosion. However, some problems remain.

Electrical equipment 2 to 5 discharges heat and it is not possible to ventilate the cabinet by natural or forced draught by the normal method used for this equipment. To remedy this an air-conditioner 9 is located inside the cabinet, with its compressor, evaporator and fan placed inside the cabinet. However, its condenser 10 is located outside the cabinet and is connected to the preceding assembly by lines 11 conveying the refrigerating liquid and passing through the wall of cabinet 1 by a leak proof seal. The condenser 10 ventilated, either by natural draught, by the method normally used for refrigerators, or by forced ventilation, using a flameproof motor 12.

Another problem stems from the fact that video monitor 4 must be observable from outside, and in particular it must be possible to operate the keyboard of central unit 3 from outside. To achieve this a window is provided on the front of the cabinet tightly closed by a transparent pane of glass of sufficient thickness to resist the internal pressure of the cabinet. Through this pane of glass the video monitor 4 may be observed and the capacitance-type keyboard of central unit 3 may be operated.

The use of an external measuring chamber 6 connected to the interior of the cabinet by optical fibres 7 prevents explosive products from being fed into the cabinet.

However, there remains one major problem, which arises from the fact that whenever the cabinet is put into operation after an interruption, repair or maintenance operation, the internal atmosphere of the cabinet risks being contaminated by explosive products, so that the electrical equipment cannot be operated until the atmosphere of the cabinet has been purged and the cabinet has been pressurised to the required value. Because of this, the equipment provided to carry out this purging and pressurisation cannot normally be electrical, or if it is, it must be flameproof.

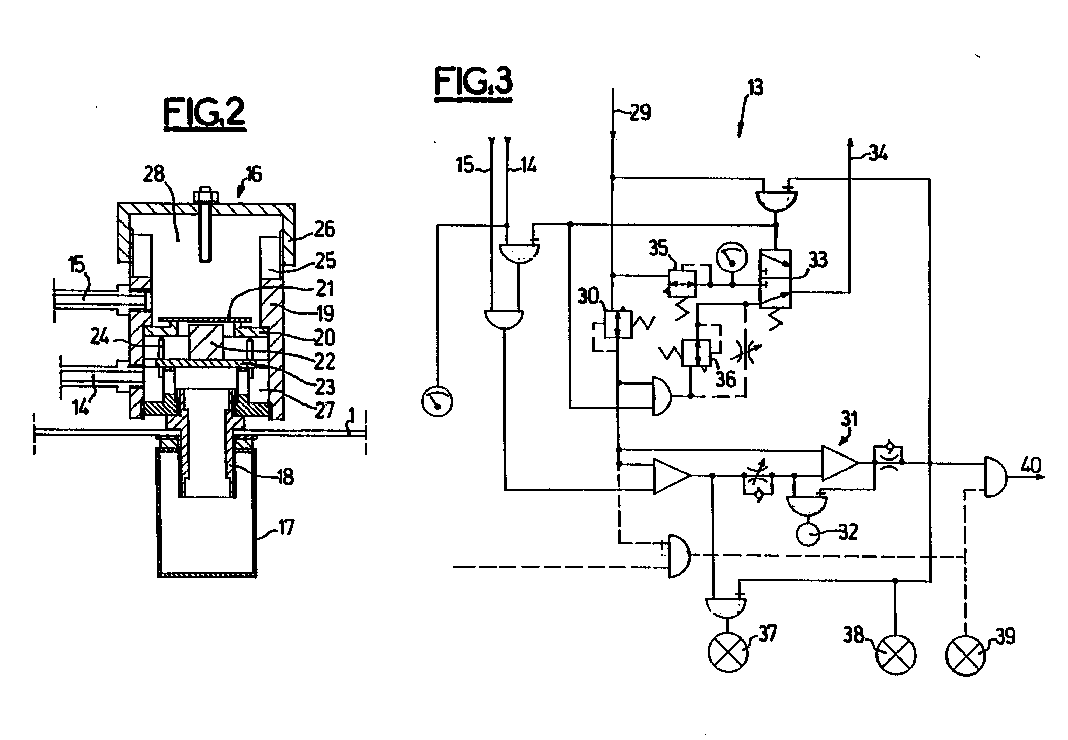

According to the invention this disadvantage is overcome by the use of a pneumatic logic controller 13 contained in a box, which may be either inside or outside the cabinet, and which is connected by two control lines 14 and 15 to an output module 16, shown in detail in Figure 2.

This output module 16, which is connected directly and securely to one wall of cabinet 1, comprises on the inside a filter 17 and a nozzle 18 for connecton to an external box 19 comprising a median partition 20 drilled with a central hole which acts as a seat for a moveable valve 21. The latter is closed by a magnet 22 integral with a base 23, provided with adjusting screws 24, thus enabling the air-gap in the closing position of valve 21, and hence the calibration force, to be regulated. When the internal pressure of the cabinet exceeds the value set, valve 21 opens and allows the gas to escape to the outside through one or more slots 25 made on the upper edge of box 19. The slots are partially sealed by adjustable means by cap 26 so that the latter serves as an adjustable throttle. In this way line 14, which is connected to upstream chamber 27 below median partition 20 provides information on the internal pressure of the cabinet, whilst line 15 connected to downstream chamber 28 is at a pressure slightly above atmospheric pressure, because of throttling at slots 25, and provides information on the purging flow rate.

The construction diagram of pneumatic logic controller 13 is shown in Figure 3, where the air or compressed nitrogen inlet can be seen at 29, for example, at the normal pressure of 3 to 7 bars, with a first pressure regulating reducer 30, which supplies a timing device 31. During the time to pressurise a capacitor 32 the timing device 31 keeps distributor 33 in the position which transmits to the cabinet, via line 34, a relatively high pressure regulated by pressure regulator 35. The escape flow is constantly controlled by the pressure in line 15, so that this time is only measured when this flow rate is sufficient. When this time has elapsed, distributor 33 supplies line 34 by means of a second pressure regulator 36, at a lower pressure, which is below the calibration pressure of valve 25, and which is controlled by line 14. Pneumatic purging indicators 37, pressure indicators 38, and, optionally, maintenance indicators 39, make it possible to monitor the progress of the operations visually. Not until all the conditions have been met does output 40 transmit the pressure to a pressure governor, which permits the electrical equipment to be switched on by means of a flameproof electrical connection box 41, which supplies the cabinet from the mains input 42.

Figure 5 shows a Pitot tube 43 which, by the simple differential circulation pressure of the liquid in line 8, supplies analytical chamber 6 through line 44, which is as short as possible. The product is discharged through another line 45 and a Pitot discharge tube 46, symmetrical to sampling tube 43. Circulation by differential pressure avoids the need for flameproof pumping equipment. This sampling device is preferably supplemented by filters, circulation detectors and calibration devices, not shown.

According to the analytical method used, a variable number of frequencies are used, within a wide spectral band ranging from 750 to 3200 nm, preferably from 2000 to 2500 nm. To ensure correct operation throughout this spectral range, fluorinated glass, with very low losses in this range, should be used for the optical fibres 7. These optical fibres are protected from the atmosphere by a tight sheath, itself mechnically protected by an envelope restricting the radii of curvature. Similarly, optical systems 47 and ends 48 of the two optrodes 49, connected symmetrically relative to body 50 of the measuring chamber, are manufactured from a special high purity glass resistant to corrosion and abrasion. The surface of the ends are treated to limit optical losses, for example by means of an anti-reflecting coating. Terminal face 51 of each optical fibre 7 is positioned accurately at the centre of corresponding optical system along the wavelength located essentially in the middle of the range by means of a high precision connector with a detector.

Normally spectrometer 2 is controlled, for continuous scanning of the spectrum, by rotating its dispersing network, and it also carries out repetitive absorbency measurements, the results of which are transmitted continuously to computer 3, which isolates within these continuous measurements those which have been selected by the method. This mode of operation is relatively slow, and not very accurate because of the numerous dispersion factors.

According to the present invention the analytical method can be considerably improved by discontinuously controlling the rotation of the network by computer 3 in order to stop it and proceed with the measurement of the preselected frequencies only. Because of the time thus gained, the measurements can be repeated for statistical elimination of erroneous values. It has also been found that most of the errors take place within the first few cycles, before the system is stabilised, so that the interest is mainly centred on removing the first few measurements.

According to the invention, absorbence measurements are carried out for the frequencies selected by the chosen analytical method.

For each frequency a number of successive measurements is carried out, say between 1 and 100, preferably about 16, each of these measurements consisting in determining the absorbences for the frequency considered.

Before each series of measurements for a given frequency, a number of no-load cycles is carried out from the time base, say between 1 and 100, and preferably about 30 cycles.

The computer then calculates, for each of the selected frequencies, the average and typical difference between the absorbencies corresponding to the number of measurements, and rejects all absorbency values which differ by an average of more than double from the typical difference, and finally recalculates the average of the values not rejected.

The satisfactory operation of the analyser can be monitored by periodically introducing a pure product such as an alkyl benzene into the system and measuring its spectrum.

Analysis and calculations do not take any longer than one minute, if, for example, sixteen frequencies are selected, whilst providing greatly improved repeatability.

**Claims**

1. A continuous analyser, comprising a spectrometer (2) and a computer for automatic data processing, for operation in a classified safety area, characterised in that the spectrometer (2), the central processing unit of the computer (3), the video monitor (4) and the keyboard, are enclosed in a leakproof cabinet (1), which is pressurised, and which also contains an air conditioner (9), the condenser (10) of which is located outside the cabinet (1); and in that the purging of the atmosphere initially contained in the cabinet, the pressurisation of the cabinet and the subsequent maintenance of this pressure, are controlled by a pneumatic logic controller (13), which is designed to operate a purging phase, during which the pneumatic logic controller checks the escape of a minimum flow through an output module (16) for a specific time, before permitting the connection of the electrical equipment (2,3,4), followed by a pressure maintainance phase during which the desired pressure is maintained inside the cabinet (1), without appreciable escape through the output module (16).

2. An analyser according to claim 1 characterised in that the output module comprises a valve (21), closable by means of a magnet (22), having an air gap which can be regulated by suitable means (24), the gas escaping from this valve being discharged to the atmosphere, passing through an adjustable throttle (25); in that the chamber (27), upstream from the valve (21) is connected by a pressure control line (14) to a pneumatic logic controller (13); and in that the chamber (28) immediately downstream from the valve (21) is connected by a purge flow control line (15) to the pneumatic logic controller (13), a filter (17) being inserted on the route of the gas discharge.

3. An analyser according to either of the preceding claims, characterised in that it is provided with an analytical chamber (6,50) located outside the cabinet (1), containing two optrodes (49) connected to the spectrometer (2) by means of a pair of optical fibres (7).

4. An analyser according to claim 3, characterised in that the optical fibres (7) are constructed from fluorinated glass exhibiting low losses in a wide band pass, and in that the terminal face (51) of each optical fibre is located in the centre of the corresponding optical system (47) along the wavelength located essentially in the middle of the band pass range.

5. An analyser according to either of claims 3 and 4, characterised in that the optical system (47, 48) of the optrodes are constructed from high purity glass resistant to corrosion and abrasion and the surfaces are treated to limit optical losses.

6. An analyser according to any of claims 3 to 5, characterised in that the analytical chamber (6,50) is located close to the line (8) conveying the product to be analysed, the sampling of which is provided by means of a Pitot tube (43), combined with a symmetrical Pitot discharge tube (46), the two tubes being connected in a circuit (44, 45) to the analytical chamber (6, 50) for natural circulation of the liquid by differential pressure.

7. An analyser according to any claims 3 to 6 characterised in that it comprises several analytical chambers (6, 50) arranged on different lines (8), the different pairs of optical fibres (7) being connected sequentially to the spectrometer (2) by a multiplexer (5) located inside the cabinet (1).

8. An analyser according to any of the preceding claims, characterised in that the central processing unit (3) is programmed to control the dispersive system contained in the spectrometer (2), so that it carries out discontinuous scanning, including stopping at each of the frequencies determined by the analytical method used, in order intially to complete between 1 and 100 no load cycles, before carrying out between 1 and 100 effective measurements to calculate, for each wavelength, the average and the typical difference between the values corresponding to the number of measurements, and to reject, for each wavelength, all values differing by an average of more than twice the typical difference, before recalculating the average of values not rejected for this wavelength.

9. An analyser according to any of the preceding claims wherein the spectrometer is an NIR (Near Infra Red) Fourier Transform Spectrometer.

FIG.1

EP 0 368 560 A2

**FIG.2**

**FIG.3**

# FIG.4

# FIG.5